# EUROPEAN PATENT APPLICATION

(11) **EP 3 261 057 A1**
(43) Date of publication of application: **27.12.2017**
(21) Application number: 17173441.1
(22) Date of filing: 30.05.2017
(51) Int. Cl.: G06T 19/00, H04N 5/232, H04N 13/04, G02B 27/01

(54) **HEAD MOUNTED DISPLAY AND TRANSMISSION CONTROL METHOD**

(30) Priority: 22.06.2016 JP 2016123900
(71) Applicant: Fujitsu Limited, Kawasaki-shi, Kanagawa 211-8588 (JP)
(72) Inventor: Someya, Taishi, Kawasaki-shi, Kanagawa 211-8588 (JP)
(74) Representative: Hoffmann Eitle

(57) **Abstract**

A device includes a camera configured to capture an image; and a control unit configured to determine whether the image acquired from the camera includes an area having a shape corresponding to a reference object, when the image includes the area, transmit image data corresponding to the image at a first frame rate to another device, and when the image does not include the area, transmit, to the other device, the image data at a second frame rate less than the first frame rate.

## Description

### FIELD

The technology disclosed in embodiments is related to a head mounted display and transmission control.

### BACKGROUND

In recent years, there has been proposed an augmented reality (AR) technology for superimposing and displaying an object on an image-captured image by using a display device such as a head mounted display (HMD). The image-captured image is image-captured by an imaging device installed in, for example, the HMD and is transmitted to a terminal device coupled to the HMD. By using image processing, the terminal device recognizes whether or not an AR marker exists on a continuously acquired image-captured image, for example. Based on a result of the image processing, the terminal device generates a superimposition image obtained by superimposing, on an image-captured image, an object such as an AR content, for example, and transmits the superimposition image to the head mounted display, thereby causing the superimposition image to be displayed.

Related technologies are disclosed in, for example, Japanese Laid-open Patent Publication No. 2015-122707 and Japanese Laid-open Patent Publication No. 2015-146113.

### SUMMARY

### TECHNICAL PROBLEM

In some cases, image-captured images image-captured by an HMD include an image-captured image including no AR marker. The image-captured image including no AR marker is considered as an image that does not have to be carefully watched by a user, and is not requested to have a high image quality or a high frame rate, in some cases. Therefore, the image-captured image including no AR marker is transmitted to a terminal device by the HMD in the same way as an image-captured image including an AR marker, thereby consuming extra electric power related to image processing, in some cases.

In one aspect, an object of the technology disclosed in the embodiments is to reduce a load of image transmission to a terminal device by a head mounted display.

### SOLUTION TO PROBLEM

According to an aspect of the invention, a device includes a camera configured to capture an image; and a control unit configured to determine whether the image acquired from the camera includes an area having a shape corresponding to a reference object, when the image includes the area, transmit image data corresponding to the image at a first frame rate to another device, and when the image does not include the area, transmit, to the other device, the image data at a second frame rate less than the first frame rate.

### BRIEF DESCRIPTION OF DRAWINGS

FIG. 1 is a block diagram illustrating an example of a configuration of a transmission control system of an embodiment.
FIG. 2 is a diagram illustrating an example of a hardware configuration of an HMD.
FIG. 3 is a diagram illustrating an example of an object data storage unit.
FIG. 4 is a sequence diagram illustrating an example of transmission control processing of an embodiment.

### DESCRIPTION OF EMBODIMENTS

Hereinafter, based on drawings, embodiments of a head mounted display, a transmission control program, and a transmission control methods disclosed in the present application will be described in detail. Note that the present embodiments do not limit the disclosed technology. In addition, the following embodiments may be arbitrarily combined to the extent that these do not contradict.

### [Embodiments]

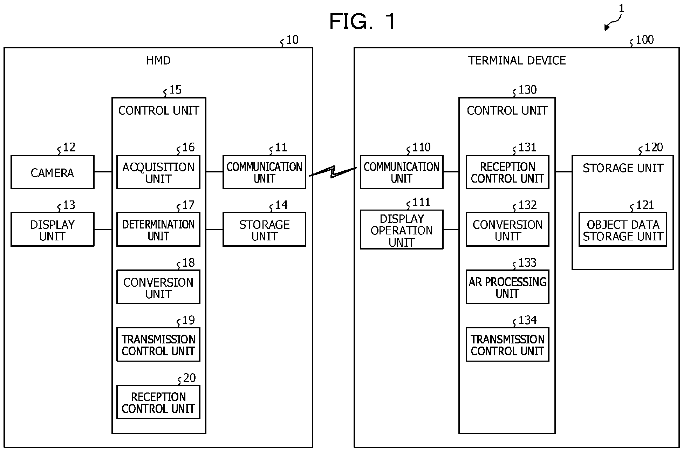

FIG. 1 is a block diagram illustrating an example of a configuration of a transmission control system of an embodiment. A transmission control system 1 illustrated in FIG. 1 includes an HMD 10 and a terminal device 100. The HMD 10 and the terminal device 100 are wirelessly coupled to each other on a one-to-one basis, for example. In other words, the HMD 10 functions as an example of a display unit of the terminal device 100. Note that while, in FIG. 1, as for a pair of the HMD 10 and the terminal device 100, one pair is illustrated as an example, the number of pairs of the HMDs 10 and the terminal devices 100 is not limited and an arbitrary number of pairs of the HMDs 10 and the terminal devices 100 may be included.

The HMD 10 and the terminal device 100 are coupled to each other by a wireless local area network (LAN) such as, for example, Wi-Fi Direct (registered trademark) so as to be able to communicate with each other. Note that the HMD 10 and the terminal device 100 may be coupled to each other by a wired line.

The HMD 10 is attached by a user along with the terminal device 100 and displays a display screen transmitted by the terminal device 100. As the HMD 10, a transmissive type HMD for a single eye may be used, for example. Note that various types of HMD such as, for example, a both-eye type and an immersive type may be used as the HMD 10. In addition, the HMD 10 includes a camera serving as an example of an imaging device.

The HMD 10 sequentially acquires an image-captured image image-captured by the imaging device and transmits, to the terminal device 100, the acquired image-captured image at a specific transmission rate. In this case, the HMD 10 determines whether or not the acquired image-captured image includes a predetermined shape. In a case where the predetermined shape is included, the HMD 10 performs control for increasing the transmission rate. In other words, based on whether or not the acquired image-captured image includes the predetermined shape, the HMD 10 changes the frame rate of the image-captured image and transmits the image-captured image to the terminal device 100. For this reason, the HMD 10 is able to reduce a load of image transmission to the terminal device 100 by the HMD 10.

In addition, the HMD 10 acquires an image-captured image image-captured by the imaging device. The HMD 10 determines whether or not the acquired image-captured image includes a predetermined shape. In a case where the predetermined shape is included, the HMD 10 transmits, to the terminal device 100, image data that corresponds to the acquired image-captured image and that has a first data amount. In a case where no predetermined shape is included, the HMD 10 transmits, to the terminal device 100, image data that corresponds to the acquired image-captured image and that has a second data amount less than the first data amount. In other words, the HMD 10 transmits, to the terminal device 100, image data encoded by changing a bit rate thereof, based on whether or not the acquired image-captured image includes the predetermined shape. For this reason, the HMD 10 is able to reduce a load of image transmission to the terminal device 100 by the HMD 10.

The terminal device 100 is an information processing device to be attached and operated by the user, and a mobile communication terminal such as, for example, a tablet terminal or a smartphone, or the like may be used. Upon receiving image data from, for example, the HMD 10, the terminal device 100 decodes the received image data. In addition, upon receiving AR marker detection information transmitted and associated with image data by the HMD 10, the terminal device 100 performs, on the corresponding image data, recognition processing of an AR marker and superimposed display processing of an AR content, thereby generating a superimposition image. The terminal device 100 transmits the generated superimposition image to the HMD 10 and causes the superimposition image to be displayed. Note that, in a case where no AR marker detection information is associated with the image data, the terminal device 100 transmits the received image data to the HMD 10 without change and causes the received image data to be displayed.

Next, a configuration of the HMD 10 will be described. As illustrated in FIG. 1, the HMD 10 includes a communication unit 11, a camera 12, a display unit 13, a storage unit 14, and a control unit 15. Note that, in addition to the functional units illustrated in FIG. 1, the HMD 10 may include functional units such as, for example, various types of input device or sound-output device.

The communication unit 11 is realized by a communication module such as, for example, a wireless LAN, or the like. The communication unit 11 is a communication interface that is wirelessly coupled to the terminal device 100 by, for example, Wi-Fi Direct (registered trademark) and that controls communication of information with the terminal device 100. The communication unit 11 transmits, to the terminal device 100, image data corresponding to an image-captured image input by the control unit 15. In addition, the communication unit 11 receives, from the terminal device 100, image data corresponding to a superimposition image or image data corresponding to image data received by the terminal device 100. The communication unit 11 outputs the received image data to the control unit 15.

The camera 12 is an imaging device to image-capture a predetermined shape associated with an AR content, in other words, an AR marker. The camera 12 image-captures an image by using, as an imaging element, a complementary metal oxide semiconductor (CMOS) image sensor, a charge coupled device (CCD) image sensor, or the like, for example. The camera 12 subjects, to photoelectric conversion, light light-received by the imaging element and performs analog/digital (A/D) conversion thereon, thereby generating an image-captured image. The camera 12 outputs the generated image-captured image to the control unit 15.

The display unit 13 is a display device for displaying various kinds of information. The display unit 13 corresponds to, for example, a display element of a transmissive type HMD in which a video picture is projected on a half mirror and through which the user is able to see an outside scene along with the video picture. Note that the display unit 13 may be a display element corresponding to an HMD of an immersive type, a video transmissive type, a retina projection type, or the like.

The storage unit 14 is realized by a storage device such as, for example, a semiconductor memory element examples of which include a random access memory (RAM) and a flash memory (Flash Memory). The storage unit 14 stores therein information used for processing in the control unit 15.

A central processing unit (CPU), a micro processing unit (MPU), or the like executes a program stored in an internal storage device while using the RAM as a working area, thereby realizing the control unit 15, for example. In addition, the control unit 15 may be realized by an integrated circuit such as, for example, an application specific integrated circuit (ASIC) or a field programmable gate array (FPGA).

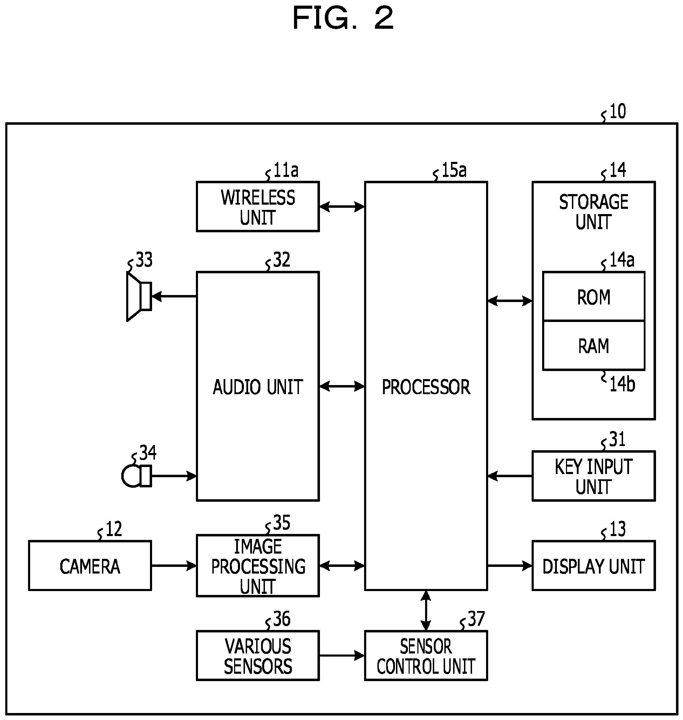

Here, by using FIG. 2, a hardware configuration of the HMD 10 will be described. FIG. 2 is a diagram illustrating an example of a hardware configuration of an HMD. As illustrated in FIG. 2, in the HMD 10, a wireless unit 11a, the display unit 13, the storage unit 14, a key input unit 31, an audio unit 32, an image processing unit 35, and a sensor control unit 37 are coupled to a processor 15a serving as an example of the control unit 15 via a bus not illustrated, for example.

The wireless unit 11a is an example of the communication unit 11. The storage unit 14 includes, for example, a read only memory (ROM) 14a and a RAM 14b. While being a power button of the HMD 10, for example, the key input unit 31 may include a button having another function. A speaker 33 and a microphone 34 are coupled to the audio unit 32. The audio unit 32 controls inputting and outputting of sounds, for example. The camera 12 is coupled to the image processing unit 35. Based on pieces of information such as focus, exposure, a gain, a brightness value (BV) value, and a color temperature, input by, for example, the camera 12, the image processing unit 35 controls the camera 12 and performs image processing on an image-captured image input by the camera 12. Various sensors 36 such as, for example, an acceleration sensor and a geomagnetic sensor are coupled to the sensor control unit 37. The sensor control unit 37 controls the various sensors 36.

Returning to the description of FIG. 1, the control unit 15 includes an acquisition unit 16, a determination unit 17, a conversion unit 18, a transmission control unit 19, and a reception control unit 20 and realizes or performs a function or an operation of information processing described below. Note that an internal configuration of the control unit 15 is not limited to the configuration illustrated in FIG. 1 and may adopt another configuration as long as adopting a configuration for performing the after-mentioned information processing.

The acquisition unit 16 acquires an image-captured image input by the camera 12. In other words, the acquisition unit 16 sequentially acquires an image-captured image image-captured by the imaging device. The acquisition unit 16 outputs the acquired image-captured image to the determination unit 17. In addition, the acquisition unit 16 determines whether or not a signal for power-off is input by, for example, the key input unit 31, in other words, whether or not to terminate processing. In a case where the processing is not to be terminated, the acquisition unit 16 continues acquiring an image-captured image input by the camera 12. In a case where the processing is to be terminated, the acquisition unit 16 performs shutdown processing on each of the units of the HMD 10.

In a case where an image-captured image is input by the acquisition unit 16, the determination unit 17 determines whether or not the input image-captured image includes a predetermined shape. Here, the predetermined shape is a shape of an AR marker and is a rectangle, for example. In a case of determining that the image-captured image includes the predetermined shape, the determination unit 17 generates AR marker detection information and outputs, to the conversion unit 18, the generated AR marker detection information along with image-captured image while associating the generated AR marker detection information with the image-captured image. In a case of determining that the image-captured image includes no predetermined shape, the determination unit 17 outputs the image-captured image to the conversion unit 18 while generating no AR marker detection information, in other words, while associating no AR marker detection information with the image-captured image.

The conversion unit 18 is an encoder/decoder that performs encoding on an acquired image-captured image and that performs decoding on a received image data. In a case where an image-captured image associated with the AR marker detection information is input by the determination unit 17, the conversion unit 18 performs encoding on the input image-captured image at a high bit rate. In addition, the conversion unit 18 performs encoding at a frame rate tailored to a frame rate (a transmission rate) at which the transmission control unit 19 transmits to the terminal device 100, for example. Note that the conversion unit 18 may perform encoding at a frame rate different from a frame rate at which the transmission control unit 19 transmits to the terminal device 100. By using a main profile (MP) and Level3 of H.264, the conversion unit 18 performs encoding on an image-captured image having the resolution of 720 x 480 while setting a bit rate and a frame rate to 10 Mbit per second (Mbps) and 30 frame per second (fps), respectively, for example. The conversion unit 18 outputs, to the transmission control unit 19, image data that is obtained by performing encoding on the image-captured image and that has the first data amount while associating the AR marker detection information with the image data having the first data amount.

In a case where an image-captured image associated with no AR marker detection information is input by the determination unit 17, the conversion unit 18 performs, on the input image-captured image, encoding at a low bit rate. In addition, in the same way as in a case of the high bit rate, the conversion unit 18 performs encoding at a frame rate tailored to a frame rate (a transmission rate) at which the transmission control unit 19 transmits to the terminal device 100 in a case where no AR marker is detected, for example. By using the MP and Level2.2 of H.264, the conversion unit 18 performs encoding on an image-captured image having the resolution of 720 x 480 while setting a bit rate and a frame rate to 4 Mbps and 10 fps, respectively, for example. The conversion unit 18 outputs, to the transmission control unit 19, image data that is obtained by performing encoding on the image-captured image and that has a second data amount less than the first data amount. Note that the conversion unit 18 may add, to the image data having the second data amount, information informing that no AR marker is detected.

In a case where received image data is input by the reception control unit 20, the conversion unit 18 performs decoding on the input image data and outputs the decoded image data to the display unit 13, thereby causing the decoded image data to be displayed therein. The received image data is decoded by, for example, H.264 used in Miracast (registered trademark).

In a case where the image data that is associated with the AR marker detection information and that has the first data amount is input by the conversion unit 18, the transmission control unit 19 transmits, to the terminal device 100 via the communication unit 11, the input image data having the first data amount while increasing the frame rate. The transmission control unit 19 transmits, to the terminal device 100, the input image data having the first data amount while increasing the frame rate to 30 fps, for example. In other words, in a case where the predetermined shape is included, the transmission control unit 19 performs control for increasing the transmission rate. In addition, in a case where the predetermined shape is included, the transmission control unit 19 transmits, to the terminal device 100, the image data that corresponds to the acquired image-captured image and that has the first data amount.

In a case where the image data that is associated with no AR marker detection information and that has the second data amount is input by the conversion unit 18, the transmission control unit 19 transmits, to the terminal device 100 via the communication unit 11, the input image data having the second data amount while decreasing the frame rate. The transmission control unit 19 transmits, to the terminal device 100, the image data having the second data amount while decreasing the frame rate to 10 fps, for example. In other words, in a case where no predetermined shape is included, the transmission control unit 19 performs control for decreasing the transmission rate. In addition, in a case where no predetermined shape is included, the transmission control unit 19 transmits, to the terminal device 100, the image data that corresponds to the acquired image-captured image and that has the second data amount less than the first data amount. Note that each of the image data having the first data amount and the image data having the second data amount is image data corresponding to an image-captured image.

Note that, in place of the AR marker detection information to be associated with the image data having the first data amount, the transmission control unit 19 may associate, with the image data having the second data amount, information informing that no AR marker is detected. In addition, the transmission control unit 19 associates the AR marker detection information with the image data having the first data amount and may associate, with the image data having the second data amount, information informing that no AR marker is detected. In other words, the transmission control unit 19 may add, to the image data having the first data amount or the image data having the second data amount, a result of determination of whether or not the predetermined shape is included and may transmit, to the terminal device 100, the image data having the first data amount or the image data having the second data amount.

By use of Miracast (registered trademark) utilizing Wi-Fi Direct (registered trademark), the reception control unit 20 receives image data from the terminal device 100 via the communication unit 11, for example. The image data is image data corresponding to a superimposition image on which an AR content is superimposed or image data corresponding to image data received by the terminal device 100. The reception control unit 20 outputs the received image data to the conversion unit 18.

Subsequently, a configuration of the terminal device 100 will be described. As illustrated in FIG. 1, the terminal device 100 includes a communication unit 110, a display operation unit 111, a storage unit 120, and a control unit 130. Note that, in addition to the functional units illustrated in FIG. 1, the terminal device 100 may include various functional units included in a known computer, for example, functional units such as various input devices and sound-output devices.

The communication unit 110 is realized by a communication module such as a wireless LAN, or the like, for example. The communication unit 110 is a communication interface that is wirelessly coupled to the HMD 10 by, for example, Wi-Fi Direct (registered trademark) and that controls communication of information with the HMD 10. The communication unit 110 receives, from the HMD 10, image data corresponding to an image-captured image. The communication unit 110 outputs the received image data to the control unit 130. In addition, the communication unit 110 transmits, to the HMD 10, image data that is input by the control unit 130 and that corresponds to a superimposition image, or image data corresponding to the received image data.

The display operation unit 111 is a display device for displaying various kinds of information and is an input device that receives various operations from the user. The display operation unit 111 is realized, as the display device, by a liquid crystal display or the like, for example. In addition, the display operation unit 111 is realized, as the input device, by a touch panel or the like, for example. In other words, in the display operation unit 111, the display device and the input device are integrated with each other. The display operation unit 111 outputs an operation input by the user, to the control unit 130, as operation information. Note that the display operation unit 111 may display the same screen as that of the HMD 10 or may display a screen different from that of the HMD 10.

The storage unit 120 is realized by a storage device such as, for example, a semiconductor memory element, examples of which include a RAM and a flash memory, or a storage device, examples of which include a hard disk and an optical disk. The storage unit 120 includes an object data storage unit 121. In addition, the storage unit 120 stores therein information used for processing in the control unit 130.

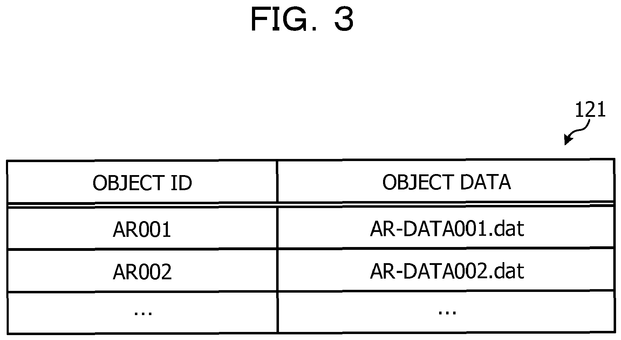

The object data storage unit 121 stores therein object data. FIG. 3 is a diagram illustrating an example of an object data storage unit. As illustrated in FIG. 3, the object data storage unit 121 includes items such as an "object identifier (ID)" and "object data". The object data storage unit 121 stores therein one record for each piece of object data, for example. Note that the object data storage unit 121 may store therein another item, for example, location information while associating the other item with object data.

The "object ID" is an identifier for identifying object data, in other words, an AR content. The "object data" is information indicating object data. The "object data" is a data file configuring the object data, in other words, the AR content, for example.

A CPU, a MPU, or the like executes a program stored in an internal storage device while using the RAM as a working area, thereby realizing the control unit 130, for example. In addition, the control unit 130 may be realized by an integrated circuit such as, for example, an ASIC or an FPGA. The control unit 130 includes a reception control unit 131, a conversion unit 132, an AR processing unit 133, and a transmission control unit 134 and realizes or performs a function or an operation of information processing described below. Note that an internal configuration of the control unit 130 is not limited to the configuration illustrated in FIG. 1 and may adopt another configuration as long as adopting a configuration for performing the after-mentioned information processing.

Upon receiving, from the HMD 10 via the communication unit 110, image data, in other words, image data corresponding to an image-captured image, the reception control unit 131 outputs the received image data to the conversion unit 132. In addition, in a case where AR marker detection information is associated with the received image data, the reception control unit 131 extracts and outputs the AR marker detection information from the received image data and to the AR processing unit 133.

In a case where the received image data is input by the reception control unit 131, the conversion unit 132 performs decoding on the input image data and outputs the decoded image data to the AR processing unit 133. The received image data is decoded by, for example, H.264.

In a case where image data corresponding to a superimposition image or image data corresponding to the received image data is input by the AR processing unit 133, the conversion unit 132 performs encoding on the input image data so that the image data is able to be transmitted by using Miracast (registered trademark). The conversion unit 132 performs the encoding by using H.264, for example. The conversion unit 132 outputs the encoded image data to the transmission control unit 134.

In a case where the decoded image data is input by the conversion unit 132, the AR processing unit 133 determines whether or not the AR marker detection information corresponding to the image data is input by the reception control unit 131. In other words, the AR processing unit 133 determines whether or not an HMD 10 side detects an AR marker. In a case where it is determined that the HMD 10 side detects an AR marker, the AR processing unit 133 performs AR marker recognition processing on the image data. The AR processing unit 133 references the object data storage unit 121 and superimposes, on the image data, object data corresponding to a recognized AR marker, in other words, an AR content, thereby generating a superimposition image. The AR processing unit 133 outputs, to the conversion unit 132, image data corresponding to the generated superimposition image.

In a case where it is determined that the HMD 10 side detects no AR marker, the AR processing unit 133 outputs the input image data to the conversion unit 132 without change. In other words, the AR processing unit 133 outputs, to the conversion unit 132, image data corresponding to the received image data.

In a case where the encoded image data is input by the conversion unit 132, the transmission control unit 134 transmits the input image data to the HMD 10 via the communication unit 110. In other words, by use of Miracast (registered trademark) utilizing Wi-Fi Direct (registered trademark), the transmission control unit 134 transmits, to the HMD 10, the image data corresponding to the superimposition image or the image data corresponding to the received image data, for example.

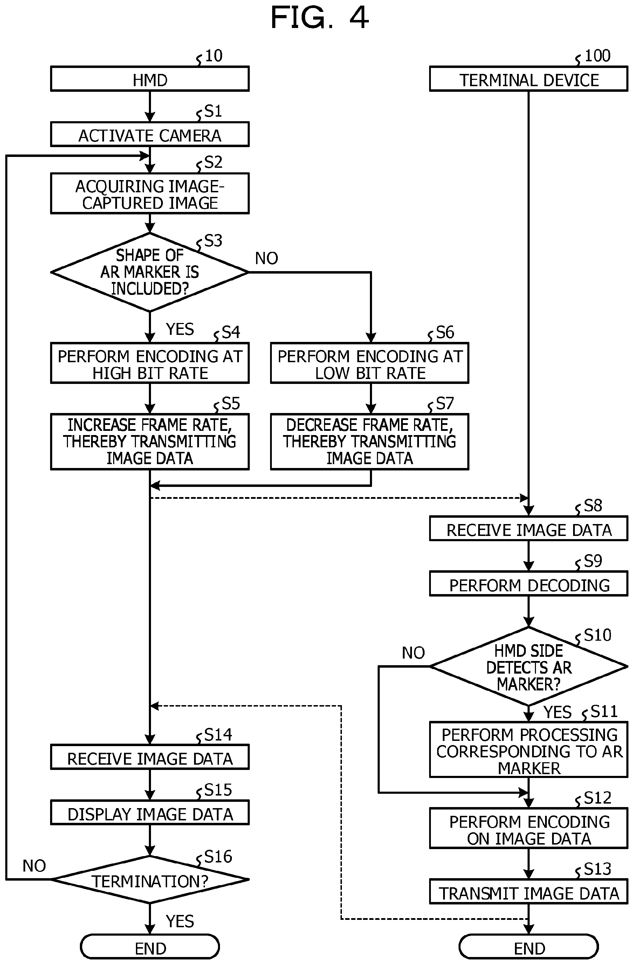

Next, an operation of the transmission control system 1 of an embodiment will be described. FIG. 4 is a sequence diagram illustrating an example of transmission control processing of an embodiment.

In a case where the user applies power, for example, the HMD 10 in the transmission control system 1 activates the camera 12 (step S1). Upon being activated, the camera 12 starts outputting an image-captured image to the control unit 15. The acquisition unit 16 in the HMD 10 starts acquiring the image-captured image input by the camera 12 (step S2). The acquisition unit 16 outputs the acquired image-captured image to the determination unit 17.

In a case where the image-captured image is input by the acquisition unit 16, the determination unit 17 determines whether or not the input image-captured image includes a shape of an AR marker (step S3). In a case where it is determined that the image-captured image includes the shape of an AR marker (step S3: affirmative), the determination unit 17 generates the AR marker detection information and associates the generated AR marker detection information with the image-captured image, thereby outputting, to the conversion unit 18, the AR marker detection information along with the image-captured image.

In a case where the image-captured image associated with the AR marker detection information is input by the determination unit 17, the conversion unit 18 performs encoding on the input image-captured image at a high bit rate (step S4). The conversion unit 18 associates the AR marker detection information with image data that is obtained by performing the encoding on the image-captured image and that has the first data amount, and the conversion unit 18 outputs, to the transmission control unit 19, the image data having the first data amount.

In a case where the image data that is associated with the AR marker detection information and that has the first data amount is input by the conversion unit 18, the transmission control unit 19 increase a frame rate, thereby transmitting, to the terminal device 100, the input image data having the first data amount (step S5).

In a case where it is determined that the image-captured image does not include a shape of an AR marker (step S3: negative), the determination unit 17 outputs the image-captured image to the conversion unit 18 while associating no AR marker detection information with the image-captured image.

In a case where the image-captured image associated with no AR marker detection information is input by the determination unit 17, the conversion unit 18 performs, on the input image-captured image, encoding at a low bit rate (step S6). The conversion unit 18 outputs, to the transmission control unit 19, image data that is obtained by performing the encoding on the image-captured image and that has the second data amount.

In a case where the image data that is associated with no AR marker detection information and that has the second data amount is input by the conversion unit 18, the transmission control unit 19 decreases a frame rate, thereby transmitting, to the terminal device 100, the input image data having the second data amount (step S7).

Upon receiving the image data from the HMD 10 (step S8), the reception control unit 131 in the terminal device 100 outputs the received image data to the conversion unit 132. In addition, in a case where the AR marker detection information is associated with the received image data, the reception control unit 131 extracts and outputs the AR marker detection information from the received image data and to the AR processing unit 133.

In a case where the received image data is input by the reception control unit 131, the conversion unit 132 performs decoding on the input image data (step S9) and outputs the decoded image data to the AR processing unit 133.

In a case where the decoded image data is input by the conversion unit 132, the AR processing unit 133 determines whether or not the HMD 10 side detects an AR marker (step S10). In a case where it is determined that the HMD 10 side detects an AR marker (step S10: affirmative), the AR processing unit 133 performs, on the image data, processing corresponding to the AR marker (step S11). In other words, the AR processing unit 133 references the object data storage unit 121 and superimposes an AR content on the image data, thereby generating a superimposition image. The AR processing unit 133 outputs, to the conversion unit 132, image data corresponding to the generated superimposition image.

In a case where it is determined that the HMD 10 side detects no AR marker (step S10: negative), the AR processing unit 133 outputs, to the conversion unit 132, image data corresponding to the received image data.

In a case where the image data corresponding to the superimposition image or the image data corresponding to the received image data is input by the AR processing unit 133, the conversion unit 132 performs encoding on the input image data (step S12). The conversion unit 132 outputs the encoded image data to the transmission control unit 134.

In a case where the encoded image data is input by the conversion unit 132, the transmission control unit 134 transmits the input image data to the HMD 10 (step S13).

The reception control unit 20 in the HMD 10 receives the image data from the terminal device 100 (step S14). The reception control unit 20 outputs the received image data to the conversion unit 18.

In a case where the received image data is input by the reception control unit 20, the conversion unit 18 performs decoding on the input image data and outputs the decoded image data to the display unit 13, thereby causing the decoded image data to be displayed (step S15).

The acquisition unit 16 determines whether or not to terminate the processing (step S16). In a case of not terminating the processing (step S16: negative), the acquisition unit 16 returns to step S2. In a case of terminating the processing (step S16: affirmative), the acquisition unit 16 performs shutdown processing on each of the units in the HMD 10, thereby terminating the transmission control processing. For this reason, the HMD 10 is able to reduce a load of image transmission to the terminal device 100 by the HMD 10. In other words, the HMD 10 and the terminal device 100 are able to reduce power consumption.

In this way, the HMD 10 sequentially acquires an image-captured image image-captured by the camera 12 serving as the imaging device and transmits the acquired image-captured image to the terminal device 100 at a specific transmission rate. In this case, the HMD 10 determines whether or not the acquired image-captured image includes a predetermined shape. In addition, in a case where the predetermined shape is included, the HMD 10 performs control for increasing the transmission rate. As a result, it is possible to reduce a load of image transmission to the terminal device 100 by the HMD 10.

In addition, in a case where no predetermined shape is included, the HMD 10 performs control for decreasing the transmission rate. As a result, it is possible to reduce a load of image transmission to the terminal device 100 by the HMD 10.

In addition, the HMD 10 acquires an image-captured image image-captured by the camera 12 serving as the imaging device. In addition, the HMD 10 determines whether or not the acquired image-captured image includes a predetermined shape. In addition, in a case where the predetermined shape is included, the HMD 10 transmits, to the terminal device 100, image data that corresponds to the acquired image-captured image and that has the first data amount. In addition, in a case where no predetermined shape is included, the HMD 10 transmits, to the terminal device 100, image data that corresponds to the acquired image-captured image and that has the second data amount less than the first data amount. As a result, it is possible to reduce a load of image transmission to the terminal device 100 by the HMD 10.

In addition, the HMD 10 adds, to the image data having the first data amount or the image data having the second data amount, a result of determination of whether or not the predetermined shape is included, thereby transmitting, to the terminal device 100, the image data having the first data amount or the image data having the second data amount. As a result, in the terminal device 100, it is possible to omit recognition processing of an image-captured image including no AR marker.

Note that while the bit rate and the frame rate of image data are increased or decreased in the above-mentioned embodiment, there is no limitation to this. Only the bit rate of image data may be increased or decreased or only the frame rate thereof may be increased or decreased, for example.

In addition, while the AR marker detection information is transmitted by the HMD 10 in the above-mentioned embodiment, there is no limitation to this. The terminal device 100 may detect the bit rate or the frame rate of received image data and may perform the AR marker recognition processing or generation of a superimposition image in accordance with the detected bit rate or frame rate, for example. For this reason, even in a case where the HMD 10 transmits no AR marker detection information, the terminal device 100 is able to determine whether or not to perform processing related to an AR marker.

In addition, individual illustrated configuration items of each of units do not have to be physically configured as illustrated. In other words, specific states of the distribution or integration of the individual units are not limited to these illustrated in the drawings, and all or part thereof may be functionally or physically distributed or integrated in arbitrary units, depending on various loads, various usage situations, and so forth. The conversion unit 18, the transmission control unit 19, and the reception control unit 20 may be integrated, for example. In addition, individual illustrated processing operations are not limited to the above-mentioned order and may be simultaneously implemented or may be implemented while changing an order, in so far as processing contents do not contradict one another.

Furthermore, all or an arbitrary part of various processing functions performed by the respective devices may be performed on a CPU (or a microcomputer such as an MPU or a micro controller unit (MCU)). In addition, it goes without saying that all or an arbitrary part of the various processing functions may be performed on a program analyzed and executed by the CPU (or the microcomputer such as an MPU or an MCU) or may be performed on hardware based on hard-wired logic.

Note that, by reading and executing the transmission control program, the HMD 10 explained in the above-mentioned embodiment is able to perform the same functions as those of the processing described in FIG. 1 and so forth. By executing processes to perform the same processing operations as those of the acquisition unit 16, the determination unit 17, the conversion unit 18, the transmission control unit 19, and the reception control unit 20, the HMD 10 is able to perform the same processing operations as those of the above-mentioned embodiment, for example.

These programs may be distributed via a network such as the Internet. In addition, these programs may be recorded in a computer-readable recording medium such as a hard disk, a flexible disk (FD), a CD-ROM, an MO, or a DVD and may be read from the recording medium by a computer, thereby being executed.

### REFERENCE SIGNS LIST

- 1: TRANSMISSION CONTROL SYSTEM
- 10: HMD
- 11: COMMUNICATION UNIT
- 12: CAMERA
- 13: DISPLAY UNIT
- 14: STORAGE UNIT
- 15: CONTROL UNIT
- 16: ACQUISITION UNIT
- 17: DETERMINATION UNIT
- 18: CONVERSION UNIT
- 19: TRANSMISSION CONTROL UNIT
- 20: RECEPTION CONTROL UNIT
- 100: TERMINAL DEVICE
- 110: COMMUNICATION UNIT
- 111: DISPLAY OPERATION UNIT
- 120: STORAGE UNIT
- 121: OBJECT DATA STORAGE UNIT
- 130: CONTROL UNIT
- 131: RECEPTION CONTROL UNIT
- 132: CONVERSION UNIT
- 133: AR PROCESSING UNIT
- 134: TRANSMISSION CONTROL UNIT

## Claims

1. A device comprising:
a camera configured to capture an image; and
a control unit configured to:
determine whether the image acquired from the camera includes an area having a shape corresponding to a reference object,
when the image includes the area, transmit image data corresponding to the image at a first frame rate to another device, and
when the image does not include the area, transmit, to the other device, the image data at a second frame rate less than the first frame rate.

2. The device according to claim 1, wherein the other device generates display information for displaying an object related to the reference object based on the image.

3. The device according to claim 2, wherein the control unit is configured to display the object on a display based on the display information when the display information is received from the other device.

4. The device according to claim 3, wherein
the device is a head mounted display, and
the display is a transmissive type display.

5. The device according to any one of claims 1 to 4, wherein the reference object is a marker.

6. The device according to claim 3, wherein the display information displays the object at an arrangement position in a real space captured in the image.

7. The device according to claim 3, wherein the display information is a superimposition image obtained by displaying the object over the image, based on the arrangement position.

8. The device according to any one of claims 1 to 7, wherein
the control unit is configured to:
encode the image with a first bit rate when the image includes the area, and
encode the image with a second bit rate less than the first bit rate when the image does not include the area,
the image data is generated by encoding the image with the first bit rate or the second bit rate.

9. A device comprising:
a camera configured to capture an image; and
a control unit configured to:
determine whether the image acquired from the camera includes an area having a shape corresponding to a reference object,
when the image includes the area, encode the image with a first bit rate, and transmit first image data corresponding to the image which is encoded with the first bit rate to another device, and
when the image does not include the area, encode the image with a second bit rate less than the first bit rate, transmit, to the other device, second image data corresponding to the image which is encoded with the second bit rate.

10. The device according to claim 9, wherein the other device generates display information for displaying an object related to the reference object based on the image.

11. The device according to claim 10, wherein the control unit is configured to display the object on a display based on the display information when the display information is received from the other device.

12. The device according to claim 11, wherein
the device is a head mounted display, and
the display is a transmissive type display.

13. The device according to any one of claims 9 to 12, wherein
when the image includes the area, the first image data is transmitted to the other device at a first frame rate, and
when the image does not include the area, the second image data is transmitted to the other device at a second frame rate less than the first frame rate.

14. A method executed by a computer, the method comprising:
acquiring an image from a camera;
determining whether the image includes an area having a shape corresponding to a reference object;
when the image includes the area, transmitting image data corresponding to the image at a first frame rate to another computer; and
when the image does not include the area, transmitting the image data at a second frame rate less than the first frame rate to the other computer.

15. A program which, when executed on the computer, causes the computer to carry out the method according to claim 14.
